# EUROPEAN PATENT SPECIFICATION

(11) **EP 4 075 172 B1**
(45) Date of publication and mention of the grant of the patent: **18.12.2024**
(21) Application number: 22163148.4
(22) Date of filing: 21.03.2022
(51) Int. Cl.: G02B 5/02, G02B 27/01

(54) **HEAD MOUNTED DISPLAY, LOUVER, OPTICAL DEVICE, AND MANUFACTURING METHOD OF LOUVER**
KOPFMONTIERTE ANZEIGE, BLENDE, OPTISCHE VORRICHTUNG UND VERFAHREN ZUR HERSTELLUNG EINER BLENDE
VISIOCASQUE, PERSIENNE, DISPOSITIF OPTIQUE ET PROCÉDÉ DE FABRICATION DE PERSIENNE

(30) Priority: 22.03.2021 JP 2021046946; 01.02.2022 JP 2022014027
(43) Date of publication of application: 19.10.2022
(73) Proprietor: CANON KABUSHIKI KAISHA, Tokyo 146-8501 (JP)
(72) Inventor: TATSUMI, Shumpei, Ohta-ku 146-8501 (JP); GENDA, Hideo, Ohta-ku 146-8501 (JP)
(74) Representative: TBK

(56) References cited:
- JP-A- H1 195 160
- US-A1- 2008 144 179
- US-A1- 2011 128 470
- US-A1- 2020 341 173

## Description

### BACKGROUND OF THE INVENTION

### Field of the Invention

The present invention relates to a head mounted display comprising a louver.

### Description of the Related Art

In recent years, head mounted displays have been used in various fields including virtual reality. The head mounted display is superior to a direct-view type flat panel display or a projection-type projection display in that an image viewed from an arbitrary direction can be displayed or an image can be superimposed and displayed on an external image viewed from the position of a user.

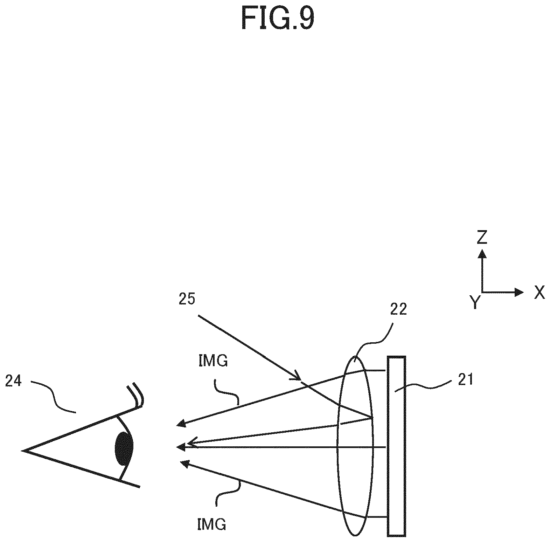

As schematically illustrated in FIG. 9, the head mounted display includes a display panel 21 that displays an image, and an optical element 22 that forms an image of display light IMG displayed on the display panel 21 in a vicinity of the position of a user's eye 24. Note that FIG. 9 is merely a conceptual schematic diagram, and an optical-path changing element such as a mirror or PBS may be provided between the display panel 21 and the user's eye 24, and the display panel 21 and the optical element 22 may be laid out at different positions. In addition, the optical element 22 may be a transmission optical element such as a convex lens, a reflection optical element such as a concave mirror, or a plurality of combinations thereof.

An optical path space for securing an optical path length of the display light IMG is required between the user's eye 24 and the optical element 22 or the above-described optical path changing element. When external light 25 enters the optical path space from the surroundings, a part of the external light may be reflected by the optical element 22, for example, a lens interface, and superimposed on the display light IMG, thereby reaching the user's eye 24. Since such external light 25 causes deterioration in image quality of a display image as a so-called external light ghost, it is preferable to prevent external light from entering the optical path space in the head mounted display as much as possible.

Japanese Patent Laid-Open No. 2020-160424 discloses a head mounted display including a combiner that synthesize display light of a display image with external light from the front, in which a louver having a light shielding property is provided below an optical path space of the display light directed to a user's eye by being reflected by the combiner. It is also disclosed that the head mounted display may be covered with a cover.

The head mounted display is provided with an electric circuit (i.e., heat-generating element) such as a display unit and a communication circuit. However, in a case that an entire periphery of the optical path space is surrounded by a light-shielding member and a user's face, heat from the heat-generating element and moisture from the user may be retained in the optical path space. If the optical path space becomes high temperature and high humidity, it may be uncomfortable for the user to wear it for a long time. In addition, the optical element may be temporarily fogged to deteriorate the image quality, or the optical element may be degraded in characteristics.

Therefore, in the head mounted display, there has been a demand for a technique capable of suppressing deterioration in display image quality due to external light and suppressing high temperature and high humidity inside the head mounted display.

Further prior art documents are JP H11 95160 A showing a head-mounted display device, US 2008/0144179 A1 showing an optical element, US 2020/0341173 A1 showing a high transmission light control film and US 2011/0128470 A1 showing a light distribution control panel, display device for mounting on mobile unit, light distribution control sheet, optical component, lighting device and display device.

### SUMMARY OF THE INVENTION

The present invention in its first aspect provides a head mounted display as specified in claims 1 to 9.

Further features of the present invention will become apparent from the following description of exemplary embodiments with reference to the attached drawings. The accompanying drawings, which are incorporated in and constitute a part of the specification, illustrate exemplary embodiments, features, and aspects of the invention and, together with the description, serve to explain the principles of the invention.

### BRIEF DESCRIPTION OF THE DRAWINGS

FIG. 1 is a schematic diagram illustrating a configuration of an optical system of a head mounted display according to a first embodiment.
FIG. 2 is a schematic diagram illustrating a configuration of an optical system of a head mounted display according to a modification of the first embodiment.
FIG. 3A is a schematic cross-sectional view illustrating a cross section of a louver according to the first embodiment, which is cut in a direction perpendicular to a main surface.
FIG. 3B is an enlarged view in which a part of the schematic cross-sectional view is enlarged.
FIG. 3C is a plan view of the main surface of the louver according to the first embodiment.
FIG. 4 is a plan view of the head mounted display according to the first embodiment as viewed from a user side.
FIG. 5A is a view illustrating a state where a resin material is applied to a substrate in the manufacturing method of a louver according to an embodiment.
FIG. 5B is a view illustrating a state in a middle of molding the resin material on the substrate using a mold.
FIG. 5C is a view illustrating a state of curing the resin material by irradiation with ultraviolet rays.
FIG. 5D is a view illustrating a state where the mold is released.
FIG. 6A is a view illustrating a state of applying a material for a light shielding portion using a dispenser in the manufacturing method of a louver according to the embodiment.
FIG. 6B is a view illustrating a state where a resin material for forming a second base portion is applied, and then ultraviolet rays are irradiated through a mold plate to cure the resin material.
FIG. 6C is a view illustrating a state where the mold plate is released.
FIG. 7A is a schematic cross-sectional view illustrating a cross section of a louver according to a second embodiment, which is cut in a direction perpendicular to a main surface.
FIG. 7B is a plan view of the main surface of the louver according to the second embodiment.
FIG. 8A is a plan view of a main surface of a louver according to a third embodiment (not covered by the claimed invention).
FIG. 8B is a plan view of a main surface of a louver according to a fourth embodiment.
FIG. 8C is a plan view of a main surface of a louver according to a fifth embodiment (not covered by the claimed invention).
FIG. 8D is a plan view of a main surface of a louver according to a sixth embodiment (not covered by the claimed invention).
FIG. 9 is a schematic diagram illustrating a configuration of an optical system of a conventional head mounted display.

### DESCRIPTION OF THE EMBODIMENTS

A head mounted display, a louver for a head mounted display, and the like according to embodiments of the present invention will be described with reference to the drawings.

In the drawings referred to in the following description of embodiments and examples, elements denoted by the same reference numerals have the same functions unless otherwise specified.

### First Embodiment

### Optical System of Head Mounted Display

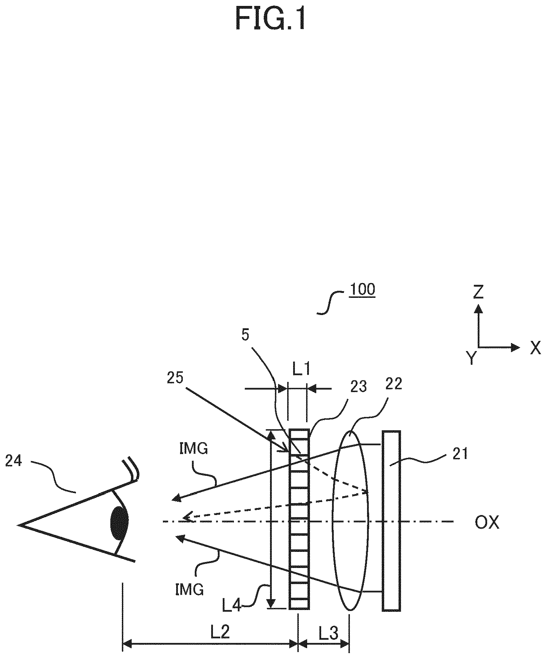

FIG. 1 is a schematic diagram illustrating a configuration of an optical system of a head mounted display 100 according to a first embodiment. Note that, since FIG. 1 is a schematic diagram for explaining an arrangement of the optical system, a mounting tool to be mounted on a head of a user, a communication unit, a power supply unit, and the like for communicating video information are omitted.

Reference numeral 21 denotes a display panel as a display unit, reference numeral 22 denotes an optical element, reference numeral 23 denotes a louver, and reference numeral 24 denotes a user's eye. The head mounted display 100 is provided with one optical system for each unit for a right eye and a left eye, and a video for the right eye is displayed on a display panel of the right-eye unit, and a video for the left eye is displayed on a display panel of the left-eye unit. FIG. 1 illustrates one unit of an optical system for the right eye or left eye. Specifically, the display panel 21 is, for example, an organic EL panel or a liquid crystal panel.

The optical element 22 as an image forming optical unit is an optical element that directs the display light IMG emitted from the display panel 21 toward the user's eye and focuses the display light IMG on a vicinity of a position of the user's eye, and causes the user to recognize an image displayed on the display panel 21 as an enlarged image with a clear-vision distance. The optical element 22 is arranged in a middle of the optical path of the display light IMG from the display panel 21 to the position of the user's eye 24, and its optical axis OX is arranged to connect a screen center of the display panel 21 and the user's eye. The optical element 22 is typically a convex single lens, but may be a lens system in which a plurality of lenses are combined so as to have positive power as a whole. The optical element 22 constituting the lens system may include an optical element that does not have a function of forming an image, and for example, may include an optical element that has a function of efficiently causing light from the entire display panel 21 to enter the user's eye.

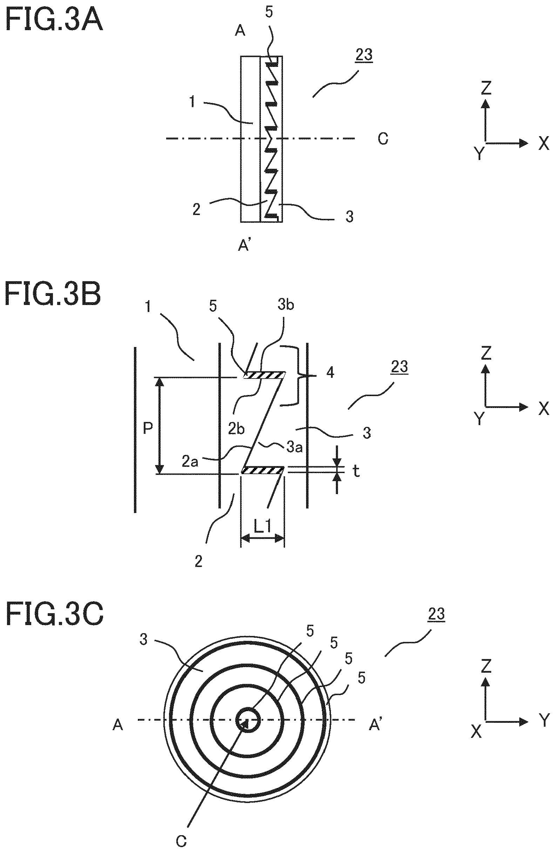

A louver 23 is a plate-like member arranged in the optical path space occupied by the optical path of the display light IMG from the optical element 22 toward the user's eye, and includes a plurality of light shielding portions therein. As will be described later with reference to FIG. 3C, the plurality of light shielding portions of the louver 23 are provided along a plurality of concentric circles having different diameters as viewed from a direction of the optical axis OX of the optical element 22. The louver 23 is arranged such that a center of the concentric circles is located on the optical axis OX of the optical element 22. In other words, the louver 23 is disposed in the optical path of the display light IMG from the optical unit that directs the display light output from the display panel to the user's eye toward the user's eye.

Here, a length of the louver 23 as viewed along the optical axis OX is L1. When viewed along the optical axis OX, a distance from the position of the user's eye to the center of the louver 23 is L2, and a distance from the center of the louver 23 to a center of the optical element 22 is L3. Note that the center of the louver 23 refers to the center of the light shielding portions 5 when viewed along the optical axis OX. L1 is set within a range of 1 mm or more and 3 mm or less, L2 is set within a range of 30 mm or less, and L3 is set within a range of 5 mm or more and 25 mm or less.

The light shielding portions 5 of the louver 23 are arranged in such a position and posture that most of the display light IMG from the optical element 22 toward the user's eye 24 is transmitted while shielding the external light 25 toward the optical element 22. The external light 25 indicated by a solid line in FIG. 1 reaches the light shielding portions 5 of the louver 23, but is shielded there. Therefore, the external light does not pass through the optical path indicated by a dotted line, and is greatly suppressed from reaching the user's eye 24 as an external light ghost.

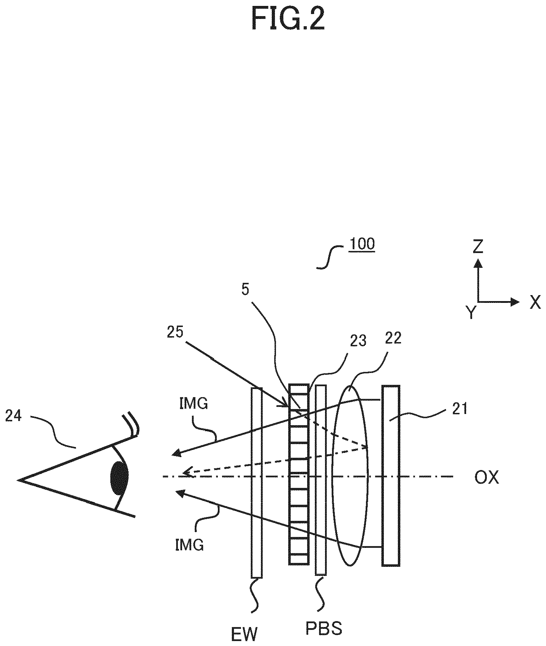

Note that the head mounted display 100 may further include another optical element. For example, as illustrated in FIG. 2, a polarizing beam splitter PBS may be provided between the optical element 22 and the louver 23. Alternatively, a window material EW, that is transparent plate member, for protecting the inside of the device from dust or the like may be provided between the louver 23 and the user's eye 24. Even in such a case, the louver 23 according to the embodiment is arranged in the optical path space occupied by the optical path of the display light IMG directed from the optical element 22 toward the user's eye.

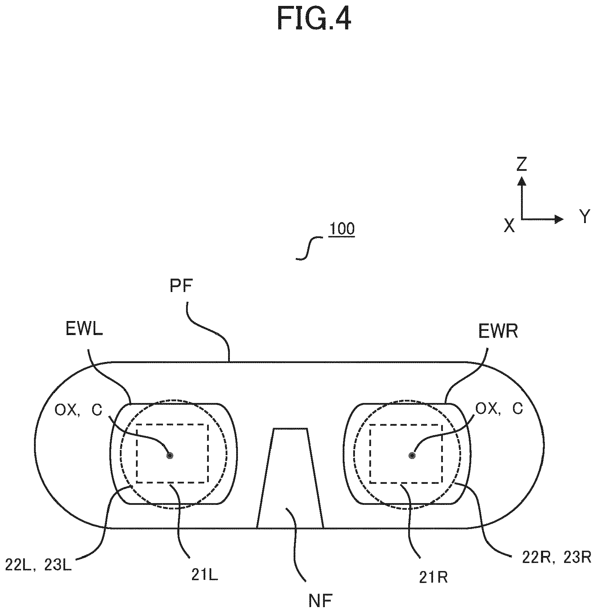

FIG. 4 is a plan view of the head mounted display 100 according to the first embodiment as viewed from a user side. Note that, since FIG. 4 is a schematic diagram for explaining an arrangement of the optical system, a mounting tool for mounting the head mounted display 100 on the head of the user, a communication unit for communicating video information, a power supply unit, and the like are omitted.

APF is a frame (i.e., frame part) made of a light-shielding member, functioning as a casing that supports the display panel and the optical member, and is also a cover that shields external light from a front direction. The frame PF is provided with a nose pad NF for positioning on the user's face. A window material EWR, a louver 23R, an optical system 22R, and a display panel 21R are arranged in order from the user's face side as elements for the right eye, and a window material EWL, a louver 23L, an optical system 22L, and a display panel 21L are provided in order from the user's face side as elements for the left eye. As in the example illustrated in FIG. 1, if the louver 23 also serves as a window material for protecting the inside of the device from dust or the like, the window material EWR and the window material EWL may not be provided.

As the display panel 21R and the display panel 21L, those having a screen aspect ratio of, for example, 4 : 3 or 16 : 9 are suitably used, but the present invention is not limited thereto. The screen center of each display panel, the optical axis OX of each imaging optical system, and the center C of each louver are arranged so as to overlap each other in plan view from the user side. However, in order to adjust congestion, the screen center of each display panel, the optical axis OX of each imaging optical system, and the center C of each louver may be slightly shifted.

In addition, as illustrated in FIG. 4, by making an outer shape of the louver substantially the same as an outer shape of the imaging optical system, for example, an outer diameter of the convex lens or the concave mirror, the utilization efficiency of the display light and the shielding of the external light can be balanced at a high level.

### Louver

Next, a structure of the louver 23 will be described in detail with reference to FIGS. 3A to 3C. FIG. 3A is a schematic cross-sectional view illustrating a cross section of the plate-shaped louver 23 cut in a direction perpendicular to a main surface, and FIG. 3B is a partially enlarged view of FIG. 3A. FIG. 3C is a plan view of the main surface of the plate-shaped louver 23 viewed from a direction of the optical axis OX in FIG. 1, and the cross-sectional view of FIG. 3A illustrates a cross section taken along line A-A' in FIG. 3C. In order to illustrate an installation posture when the louver 23 is installed in the head mounted display, an XYZ coordinate system corresponding to FIG. 1 is illustrated in each drawing.

The louver 23, which is a plate-like optical element as a whole, is an optical element in which a substrate 1 made of a translucent material, a first base portion 2 made of a translucent resin material, a second base portion 3 made of a translucent resin material, and a light shielding portions 5 made of a light shielding material are integrated. In the following description, the first base portion 2, the second base portion 3, and the light shielding portions 5 may be collectively referred to as a louver body.

In the embodiment illustrated in FIG. 3A, the louver 23 includes the substrate 1. However, if sufficient mechanical strength is secured only by the louver body without providing the substrate 1, the substrate 1 may be omitted, and the louver 23 may be configured only by the first base portion 2, the second base portion 3, and the light shielding portions 5. Conversely, when it is desired to firmly protect the first base portion 2, the second base portion 3, and the light shielding portions 5, a substrate may be provided not only on the side of the first base portion 2 but also on the side of the second base portion 3, and the louver body may be sandwiched between the two substrates.

### Substrate

As a substrate 1, any of a glass material and an optical resin material can be used as long as desired optical characteristics such as transparency are satisfied. The glass material is suitable when focusing on the viewpoint that the characteristics are hardly changed (i.e., in terms of reliability). For example, various types of glass such as general optical glass typified by silicate glass, borosilicate glass, and phosphate glass, quartz glass, and glass ceramic can be used. On the other hand, when focusing on cost reduction and weight reduction, it is preferable to use a resin, and examples thereof include resins such as a thermoplastic resin, a thermosetting resin, an ultraviolet curable resin, and a two-liquid curable resin. Examples of the thermoplastic resin include polymethyl methacrylate (PMMA), polycarbonate, polystyrene, MS resin, AS resin, polyolefin such as polyethylene and polypropylene, polyester such as polyethylene terephthalate and polybutylene terephthalate, polyvinyl chloride, cellulose acylate, thermoplastic elastomer, and cycloolefin polymer. Examples of the thermosetting resin include phenol resins. These resins may be used alone or in combination of two or more thereof. Note that the substrate 1 can be manufactured by, for example, a thermal imprinting method, an optical imprinting method, extrusion molding, injection molding, or the like. The shape of the main surface of the substrate 1 in a cross-sectional view is not necessarily limited to a flat surface as illustrated in FIG. 3A, and can be selected from, for example, a concave spherical surface, a convex spherical surface, an axisymmetric aspheric surface, and the like. In addition, the outer shape of the substrate 1 in plan view from a direction perpendicular to the main surface can be various shape, and it can be selected from a circle, a quadrangle, and the like.

### Louver body

The louver body comprises a first base portion 2, a second base portion 3 and light shielding portions 5. The first base portion 2 and the second base portion 3 may be collectively referred to as a base portion. As illustrated in FIG. 3A, regarding the first base portion 2, a main surface on an emission side of display light IMG when assembled to a head mounted display is a flat surface, and a main surface on an incident side of the display light IMG (i.e., the surface facing the second base portion 3) has a concave and convex portion. In addition, regarding the second base portion 3, when assembled to the head mounted display, a main surface on an incident side of the display light IMG is a flat surface, and a main surface on an emission side of the display light IMG (i.e., the surface facing the first base portion 2) has a concave and convex portion. Note that, in a case that a substrate whose main surface shape in a cross-sectional view is not flat is used as the substrate 1, the flat surfaces of the first base portion 2 and the second base portion 3 described above will have shapes (i.e., non-flat surfaces) according to the main surface shape of the substrate 1.

The concave and convex portion of the first base portion 2 and the concave and convex portion of the second base portion 3 are fitted to each other, and the first base portion 2 is integrated with the second base portion 3. The first base portion 2 and the second base portion 3 are made of a material having substantially a same refractive index, and are preferably made of a same type of resin material. The resin material for forming the first base portion 2 and the second base portion 3 is not particularly limited as long as it satisfies optical characteristics such as transmittance and reliability, but a photosensitive resin material is preferable because it is easy to manufacture. Specifically, an acrylate-based resin, a polycarbonate resin, and the like are suitably used. In order to achieve predetermined optical characteristics, it is also possible to internally add inorganic fine particles to the optical resin material. The inorganic fine particles to be added are selected according to required optical characteristics. Specific examples thereof include zirconia oxide, titanium oxide, zinc oxide, indium oxide, tin oxide, antimony oxide, indium tin oxide (ITO), tin oxide doped with antimony (ATO), and indium oxide doped with zinc (IZO).

The concave and convex portions included in the first base portion 2 and the second base portion 3 may have any shape that can be fitted to each other and can form the light shielding portions 5 at predetermined positions and in predetermined directions so as to be described later. As illustrated in FIGS. 3A and 3B, a sawtooth shape in which triangles are arranged is suitably used as a cross-sectional shape of the concave and convex portion, but other shapes may be used. Examples thereof include a cross-sectional shape in which a triangle such as an isosceles triangle and a right triangle, a quadrangle, a trapezoid, a semicircle, or the like are continuously arranged. When viewed in plan view from the direction of the optical axis OX in FIG. 1, the concave and convex portion is formed along a plurality of concentric circles having different diameters.

When the portion where the first base portion 2 and the second base portion 3 are fitted is viewed along a Z direction (i.e., direction orthogonal to the main surface), it can be seen that a portion where the first base portion 2 and the second base portion 3 are in contact with each other and the portion 4 where the first base portion 2 and a second base portion 3 sandwich the light shielding portions 5 are alternately arranged.

Since an interface where a 2a surface of the first base portion 2 and a 3a surface of the second base portion 3 are in contact with each other is an interface where the same materials are in contact with each other, the interface does not act optically, and this portion serves as a window through which the display light IMG is transmitted. As described above, the louver of the embodiment includes light transmitting portions having a predetermined width as viewed in the optical axis direction and the light shielding portions disposed so as to sandwich each of the light transmitting portions.

On the other hand, each of the light shielding portions 5 is sandwiched between a 2b surface of the first base portion 2 and a 3b surface of the second base portion 3. When viewed in plan view from the direction of the optical axis OX in FIG. 1, the light shielding portions 5 are formed along a plurality of concentric circles having different diameters as illustrated in FIG. 3C. The light shielding portions 5 of the louver 23 are arranged in such a position and posture that most of the display light IMG from the optical element 22 toward the user's eye 24 is transmitted while effectively shielding the external light 25 toward the optical element 22 as illustrated in FIG. 1.

When the louver 23 is mounted on the head mounted display, the centers C of the plurality of concentric circles constituting the light shielding portions 5 are arranged on the optical axis of the image forming optical unit, that is, the optical axis OX of the optical element 22 illustrated in FIG. 1. In other words, the centers C of the plurality of concentric circles constituting the light shielding portions 5 are arranged on a line connecting the screen center of the display panel 21 and the position of the user's eye 24. By adopting the light shielding portions each having a concentric circle shape, there is an advantage that luminance uniformity of the display image becomes excellent. There is also an advantage that manufacturing is facilitated if the louver is manufactured by molding or using a dispenser. For example, since stress acts isotropically, distortion is small, and the light shielding material can be easily applied by rotating the substrate.

As illustrated in FIG. 3B, when an interval between the light shielding portions or a difference between radius of adj acent concentric circles is P, and a thickness of the light shielding portion (i.e., a width of each of the light shielding portions in plan view from the direction of the optical axis OX) is t, t/P is preferably 9% or less (t/P ≤ 9%). At this time, P is preferably set within a range of 500 µm or more and 2000 µm or less, and t is preferably set within a range of 0.1 µm or more and 45 µm or less. When the length of each of the light shielding portions 5 in the optical axis direction is L1, L1 is preferably set within a range of 1 mm or more and 3 mm or less.

Therefore, in order to ensure sufficient light shielding effect against the external light, t is preferably 0.1 µm or more, P is preferably 2000 µm or less, and L1 is preferably 1 mm or more. However, if t is set to more than 45 µm, P is set to less than 500 µm, or L1 is set to more than 3 mm, the ratio at which the light shielding portion 5 shields the display light IMG increases, whereby the display image becomes dark. Therefore, it is preferable to set t, P, and L1 within the above-described ranges, and in particular, by setting t/P ≤ 9%, prevention of ghost due to external light and securing of luminance and uniformity of a display image can be realized with high balance.

Since the light shielding portion 5 only needs to shield a visible light component of the external light 25 from traveling toward the optical element 22, the light shielding portion 5 can be formed using a light absorbing material that absorbs visible light or a light reflecting material that reflects the visible light, and in some cases, a multilayer structure in which these materials are stacked may be adopted. Here, in a case of using the material that reflects the visible light, the position and shape of the light shielding portion 5 is set so that the reflected external light does not become stray light.

As the material that absorbs the visible light, for example, a coating material that includes a pigment, or a dye can be appropriately used, but in a case that especially the light absorbing property needs to be strengthened, a black coating material is preferably selected, and a pigment-containing material is preferably used in terms of durability. Examples of the pigment include ivory black, peach black, lamp black, bitumen, carbon black, and black aniline. Among them, the carbon black and black aniline are particularly preferably used. A color material can be appropriately used for various purposes such as obtaining different effects depending on the wavelength of incident external light.

In a case of forming a reflection layer in the light shielding portion, there may be a specular reflection type or a diffusion reflection type. In a case of using the specular reflection type, it is possible to suppress an external light ghost by reflecting external light in a direction that does not affect the observation of the display light IMG. For a light reflecting layer of the specular reflection type, for example, a metallic pigment-containing material such as aluminum, silver, nickel, stainless steel, copper, zinc, or iron is preferably used. If fine particles of aluminum, silver, nickel, or stainless steel are used alone or in combination, a light reflecting layer of a silver specular reflection type can be obtained. If fine particles of copper, zinc, or iron are used alone or in combination, a light reflecting layer of gold or red copper specular reflection type can be obtained. In a case of using the diffusion reflection type, it is easy to average a light amount distribution, suppress the external light ghost, and suppress brightness unevenness. As the light reflecting layer of the diffusion reflection type, for example, a pigment-containing material such as silver white, titanium white, zinc white, or aluminum powder is preferably used.

In addition, the method for forming the light shielding portion is not particularly limited, and an appropriate manufacturing method may be adopted. For example, a coating method of applying a coating material containing a coloring material to a predetermined surface of the concave and convex shape of the first base portion 2 and/or the second base portion 3, or a method of vacuum depositing a metal material such as aluminum can be used. In a case of forming the light shielding portion 5 by the coating method, a contact type or a non-contact type may be used. As the contact type, for example, there is a method of applying a coloring material using a brush, a sponge, or the like, which is also used for lens ink coating. As the non-contact type, for example, there is a method of applying a coloring material using a spray or a dispenser. As will be described later, in a case of applying the coating material by a dispenser, an annular light shielding portion can be formed by applying the coating material from an oblique direction toward a predetermined surface of the concave and convex portion of the first base portion 2 and/or the second base portion 3.

### Manufacturing method of louver

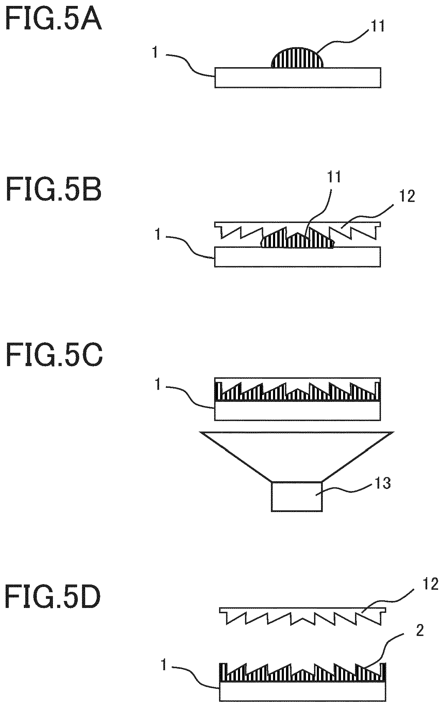

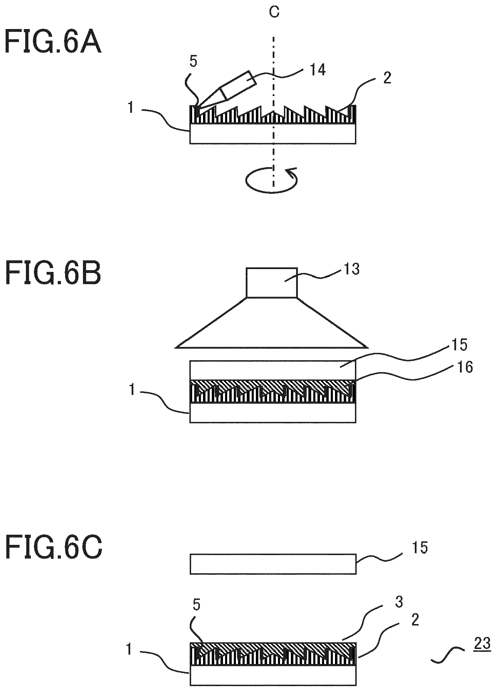

Next, a manufacturing method of a louver according to the present embodiment will be described with reference to FIGS. 5Ato 5D and FIGS. 6Ato 6C. First, as illustrated in FIG. 5A, an appropriate amount of an ultraviolet curable resin material 11 for forming the first base portion 2 is applied onto the substrate 1. Next, as illustrated in FIG. 5B, the resin material 11 is pressed by a mold 12 for replica molding the shape of the first base portion 2, and the resin material 11 is filled between the substrate 1 and the mold 12 so as not to form a gap. In the mold 12, there is formed a pattern for molding a plurality of concave and convex portions each having a concentric circle shape and different diameters on the main surface of the first base portion 2.

When the filling of the resin material 11 is completed, as illustrated in FIG. 5C, ultraviolet rays are irradiated from an ultraviolet light source 13 to cure the ultraviolet curable resin material 11. When the irradiation with ultraviolet rays is completed, as illustrated in FIG. 5D, the first base portion 2 formed in close contact with the substrate 1 is released from the mold 12. Furthermore, in order to completely cure the resin material, the resin material may be set in an oven and subjected to heat treatment.

Next, a light shielding portion is formed on a predetermined surface of the first base portion 2. That is, the light shielding portion 5 is formed on the 2b surface described with reference to FIG. 3B. Specifically, as illustrated in FIG. 6A, the substrate 1 is rotated around the center C of a plurality of concentric circles having different diameters as a rotation shaft, and the material of the light shielding portion 5 is applied along the 2b surface of each concentric circle using a dispenser 14. By appropriately tilting and applying the dispenser 14, the coating material containing the light shielding material can be applied only to the 2b surface without contaminating the 2a surface. After completion of the application, the light shielding portion 5 is formed on the first base portion 2 by heating and firing in an oven to dry and cure the coating material.

Next, an appropriate amount of an ultraviolet curable resin material 16 for forming the second base portion 3 is applied onto the first base portion 2 on which each of the light shielding portions 5 is formed. Further, the resin material 16 is pressed by a mold plate 15 for replica molding the shape of the second base portion 3, and the resin material 16 is filled between the first base portion 2 on which the light shielding portions 5 are formed and the mold plate 15 so as not to form a gap. The mold plate 15 is made of a transparent material that transmits ultraviolet rays, and the molding surface in contact with the resin material 16 is a flat surface.

When the filling of the resin material 16 is completed, as illustrated in FIG. 6B, ultraviolet rays are irradiated from the ultraviolet light source 13 to cure the ultraviolet curable resin material 16. When the ultraviolet irradiation is completed, the mold is released from the mold plate 15 as illustrated in FIG. 6C. Furthermore, in order to completely cure the resin material, the resin material may be set in an oven and subj ected to heat treatment. By the above manufacturing method, a close contact two-layer type louver 23 of the embodiment can be manufactured.

In the head mounted display of the embodiment, since it is not necessary to surround the periphery of the optical path space of the display light with the light shielding member by providing the louver 23, it is possible to suppress deterioration of display image quality due to external light and to suppress high temperature and high humidity inside the head mounted display. Note that, in the present embodiment, the light shielding portion 5 is provided along a plurality of concentric circles, but the effect of the embodiment is exerted as long as the positional deviation is within 10% of the width of the light shielding portion 5.

### Second Embodiment

A second embodiment which is a modification of the first embodiment will be described with reference to the drawings. Description of matters common to the first embodiment will be omitted or simplified. As illustrated in FIG. 3C, the head mounted display according to the first embodiment uses the louver 23 having the plurality of concentrically formed light shielding portions 5 having different diameters. On the other hand, in the present embodiment, a louver 73 including a plurality of light shielding portions provided along a plurality of concentric arcs having different diameters is used.

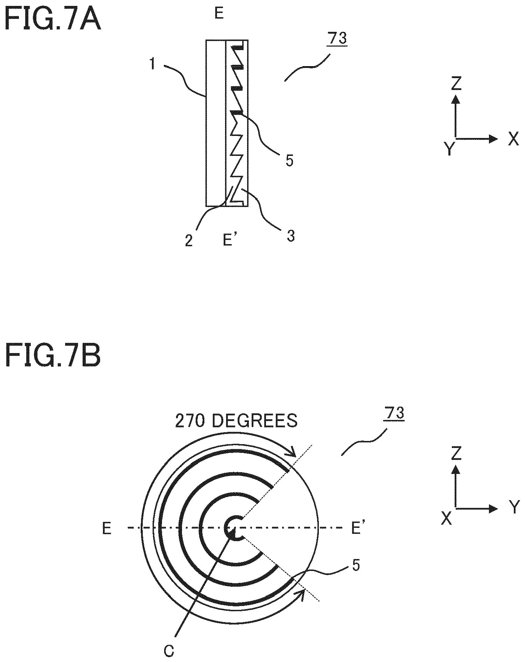

FIG. 7A is a schematic cross-sectional view illustrating a cross section of the plate-shaped louver 73 cut in a direction perpendicular to a main surface, and FIG. 7B is a plan view of the main surface of the plate-shaped louver 73 viewed from the direction of the optical axis OX in FIG. 1. The cross-sectional view of FIG. 7A illustrates a cross section taken along line E-E 'in FIG. 7B. In order to illustrate an installation posture when the louver 73 is installed in the head mounted display, the XYZ coordinate system corresponding to FIG. 1 is illustrated in each drawing.

As illustrated in FIG. 7B, in the present embodiment, the light shielding portion 5 is provided along a plurality of concentric arcs having different diameters in the louver 73. In this example, the light shielding portion 5 is formed along an arc having a central angle of 270 degrees, but the magnitude of the central angle is not limited to this example. Furthermore, the number of arcs provided with the light shielding portion 5 is not limited to one for one diameter, and for example, the light shielding portion 5 may be provided along three arcs having the same diameter, for example, concentric arcs having a central angle of 90 degrees, arranged with a gap so as not to overlap each other.

The louver 73 according to the present embodiment can have a configuration in which the light shielding portion is not disposed in a direction in which it is clear that external light does not enter due to, for example, component mounting of a head mounted display or a direction in which loss of display light is desired to be reduced as much as possible. Alternatively, a gap for releasing stress during manufacture or use can be formed in the light shielding portion having the same diameter. In the sectoral-shaped region where the light shielding portion 5 is not provided, the first base portion 2 and the second base portion 3 formed of materials having substantially the same refractive index abut on each other, and thus, the arc-shaped region optically functions as a window.

The louver of the present embodiment can be manufactured by a manufacturing method substantially similar to that of the first embodiment. However, the process described with reference to FIG. 6A is controlled differently from the first embodiment. That is, in the present embodiment, when the material of the light shielding portion 5 is applied using the dispenser 14, the ejection timing of the dispenser 14 is controlled such that the coating material is applied only to the arc having the central angle of 270 degrees while the substrate 1 is rotated about the center C of the concentric arc.

In the head mounted display of the embodiment, since it is not necessary to surround a periphery of the optical path space of the display light with the light-shielding member by providing the louver 73, it is possible to suppress deterioration of display image quality due to external light and to suppress high temperature and high humidity inside the head mounted display. Note that, in the present embodiment, the light shielding portion 5 is provided along a plurality of concentric arcs, but the effect of the embodiment is exerted as long as the positional deviation is within 10% of the width of the light shielding portion 5.

### Third Embodiment (not covered by the claimed invention)

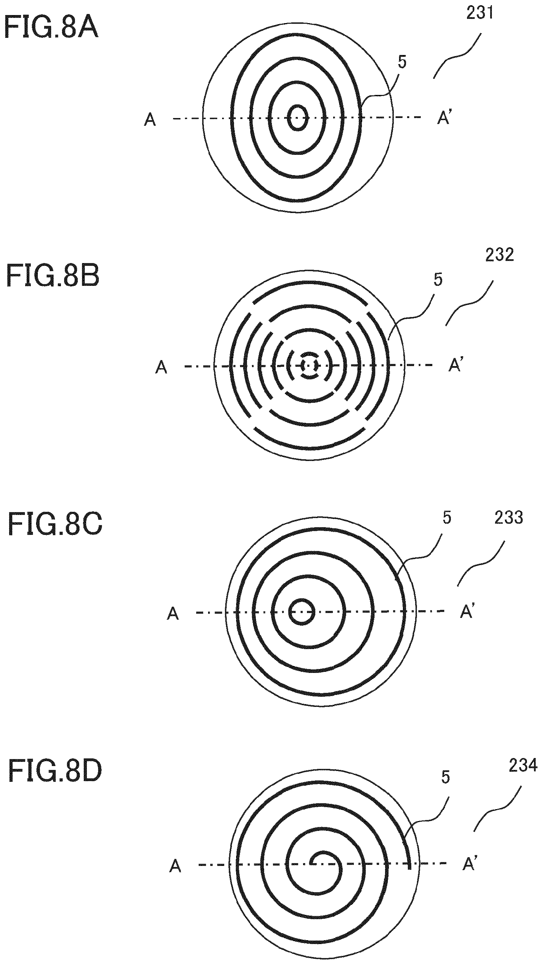

A third embodiment which is another modification of the first embodiment will be described with reference to the drawings. Description of matters common to the first embodiment will be omitted or simplified. In the present embodiment, a louver 231 having the light shielding portion 5 formed in a plurality of elliptical shapes having different diameters is used. FIG. 8A is a plan view of a main surface of the plate-shaped louver 231 viewed from the direction of the optical axis OX in FIG. 1. As illustrated in FIG. 8A, in the present embodiment, the light shielding portion 5 is formed in a plurality of elliptical shapes having different diameters in the louver 231.

In the louver 231 according to the present embodiment, the pitch of the light shielding portions, that is, the interval of the light shielding portions arranged with the light transmitting portion interposed therebetween differs depending on the radial direction. For example, the pitch can be narrowed in a direction in which an entering angle of the external light is large and the shielding effect of the external light is desired to be enhanced, and the pitch can be widened in a direction in which an entering angle of the external light is small and the loss of the display light is desired to be reduced as much as possible. By adopting such a configuration, the degree of design of component mounting of the head mounted display can be enhanced.

The louver of the present embodiment can be manufactured by a manufacturing method substantially similar to that of the first embodiment. However, the process described with reference to FIG. 6A is controlled differently from the first embodiment. That is, in the present embodiment, when the material of the light shielding portion 5 is applied using the dispenser 14, the dispenser 14 is scanning-controlled in synchronization with the rotation such that the substrate 1 is rotated about the center C of the ellipses while the application position is changed to apply coating material.

### Fourth Embodiment

A fourth embodiment which is another modification of the first embodiment will be described with reference to the drawings. Description of matters common to the first embodiment will be omitted or simplified.

In the present embodiment, a louver 232 provided along a plurality of concentric arcs having different diameters and including a plurality of light shielding portions having different pitches depending on directions is used. FIG. 8B is a plan view of a main surface of the plate-shaped louver 232 viewed from the direction of the optical axis OX in FIG. 1. As illustrated in FIG. 8B, in the present embodiment, the light shielding portion 5 is formed along a plurality of concentric arcs having different diameters in the louver 232.

In the louver 232 according to the present embodiment, the pitch of the light shielding portions, that is, the interval of the light shielding portions arranged with the light transmitting portion interposed therebetween differs depending on the radial direction. For example, the pitch can be narrowed in a direction in which an entering angle of the external light is large and the shielding effect of the external light is desired to be enhanced, and the pitch can be widened in a direction in which an entering angle of the external light is small and the loss of the display light is desired to be reduced as much as possible. By adopting such a configuration, the degree of design of component mounting of the head mounted display can be enhanced. The louver of the present embodiment can be manufactured by a manufacturing method substantially similar to that of the second embodiment.

### Fifth Embodiment (not covered by the claimed invention)

A fifth embodiment which is another modification of the first embodiment will be described with reference to the drawings. Description of matters common to the first embodiment will be omitted or simplified. In the present embodiment, a louver 233 having the light shielding portion 5 formed in a plurality of circular shapes having different centers and different diameters is used. FIG. 8C is a plan view of a main surface of the plate-shaped louver 233 viewed from the direction of the optical axis OX in FIG. 1. As illustrated in FIG. 8C, in the present embodiment, the light shielding portion 5 is formed in a plurality of circular shapes having different centers and different diameters in the louver 233.

In the louver 233 according to the present embodiment, the pitch of the light shielding portions, that is, the interval of the light shielding portions arranged with the light transmitting portion interposed therebetween differs depending on the radial direction. For example, the pitch can be narrowed in a direction in which an entering angle of the external light is large and the shielding effect of the external light is desired to be enhanced, and the pitch can be widened in a direction in which an entering angle of the external light is small and the loss of the display light is desired to be reduced as much as possible. By adopting such a configuration, the degree of design of component mounting of the head mounted display can be enhanced.

The louver of the present embodiment can be manufactured by a manufacturing method substantially similar to that of the first embodiment. However, the process described with reference to FIG. 6A is controlled differently from the first embodiment. That is, in the present embodiment, when the material of the light shielding portion 5 is applied using the dispenser 14, the material is applied while the rotation center of the substrate 1 is aligned with the center C of the circles to be applied.

### Sixth Embodiment (not covered by the claimed invention)

A sixth embodiment which is another modification of the first embodiment will be described with reference to the drawings. Description of matters common to the first embodiment will be omitted or simplified. In the present embodiment, a louver 234 having the light shielding portion 5 formed in a spiral shape is used.

FIG. 8D is a plan view of a main surface of the plate-shaped louver 234 viewed from the direction of the optical axis OX in FIG. 1. As illustrated in FIG. 8D, in the present embodiment, the light shielding portions 5 are connected along a spiral shape in the louver 234. It can be said that the plurality of light shielding portions arranged so as to sandwich the light transmitting portion are assembled and configured as one member. The louver of the present embodiment also includes light shielding portions disposed so as to sandwich a light transmitting portion having a predetermined width in a cross section taken along a direction orthogonal to the optical axis direction of an optical unit.

The louver 234 according to the present embodiment can be mass-produced by a simple manufacturing method. In the louver of the present embodiment, for example, a flexible transparent plate-like sheet is prepared, and a light shielding material is uniformly applied to one surface of the sheet. As the coating method, a simple method such as spraying, squeegee, or spin coating can be adopted. Thereafter, the louver 234 can be produced by winding the sheet in a roll shape and cutting the sheet. When the optical performance is deteriorated due to flatness, voids, or the like of the surface, the optical performance can be improved by a method such as covering the surface with a transparent sheet or filling the voids with a transparent resin.

### Examples

Specific examples will be described below.

### Examples 1 to 3

A close contact two-layer type louver according to the first embodiment having the structure described with reference to FIGS. 3A to 3C was manufactured by the manufacturing method described with reference to FIGS. 5A to 5D and FIGS. 6A to 6C.

A material of the substrate 1 having a flat plate and a circular shape was prepared as an optical glass containing boron and silicon, for example, "S-BSL7" manufactured by Ohara Inc., with a size of ϕ 45 mm. As a mold for forming the concave and convex portion on the first base portion 2, a NiP layer plated on a metal base material was cut with a precision processing machine to form a desired inverted shape of the concave and convex portion.

The first base portion 2 and the second base portion 3 were sequentially formed on one main surface of the substrate 1. The first base portion 2 was formed of an ultraviolet curable acrylic resin composition. The light shielding portion was formed by applying a coating material as a raw material of the light shielding portion from an oblique direction using a dispenser while rotating the substrate 1 about the center of the concentric circle of the first base portion 2 as a rotation center. The dispenser was used because a discharge amount appropriate for forming a film thickness of about 10 µm can be supplied, and the number of concentric circles to be applied per substrate is as small as about 40, and the dispenser is compatible with the preceding and succeeding processes.

In Examples 1 to 3, the pitches P (i.e., interval between adjacent light shielding portions or difference in radius between adjacent concentric circles) between the light shielding portions were set to different sizes. That is, P = 500 µm in Example 1, P = 1000 µm in Example 2, and P = 2000 µm in Example 3.

The thickness t of the light shielding portion (i.e., the width of the light shielding portion in plan view from the direction of the optical axis OX) was t = 45 µm in Example 1, t = 10 µm in Example 2, and t = 0.1 µm in Example 3. Subsequently, the second base portion 3 was formed of the same ultraviolet-curable acrylic resin composition as that of the first base portion 2 to produce a close contact two-layer type louver.

In each example, t/P, which is the ratio of the radial width t to the radial pitch P of the light shielding portions or the interval between the light shielding portions, is t/P = 9% in Example 1, t/P = 1% in Example 2, and t/P = 0.005% in Example 3.

The louvers of Examples 1 to 3 were respectively incorporated into each head mounted display for evaluation of external light ghosts and brightness unevenness, and visual evaluation of the external light ghosts and the brightness unevenness was performed under an illumination space laid out for evaluation. As a result of the evaluation, in the louvers of Examples 1 to 3, it has been confirmed that the external light ghost is reduced to a level at which the external light ghost cannot be visually recognized, and the brightness unevenness is hardly visually recognized. That is, the display image is much easier to see than a case where the louver is not provided.

### Examples 4 to 6

A close contact two-layer type louver according to the second embodiment having the structure described with reference to FIGS. 7A to 7B was manufactured by the manufacturing method described with reference to FIGS. 5A to 5D and FIGS. 6A to 6C.

In Examples 4 to 6, the pitches P (i.e., interval between adjacent light shielding portions or difference in radius between adjacent concentric arcs) between the light shielding portions were set to different sizes. That is, P = 500 µm in Example 4, P = 1000 µm in Example 5, and P = 2000 µm in Example 6. The thickness t of the light shielding portion (i.e., the width of the light shielding portion in plan view from the direction of the optical axis OX) was t = 45 µm in Example 4, t = 10 µm in Example 5, and t = 0.1 µm in Example 6.

The light shielding portion was formed by applying a coating material as a raw material of the light shielding portion from an oblique direction using a dispenser while rotating the substrate 1 by 270 degrees about the center of concentric circles of the first base portion 2 as a rotation center.

The louvers of Examples 4 to 6 were respectively incorporated into each head mounted display for evaluation of external light ghosts and brightness unevenness, and visual evaluation of the external light ghosts and the brightness unevenness was performed under an illumination space laid out for evaluation. As a result of the evaluation, in the louvers of Examples 4 to 6, it has been confirmed that the external light ghost is reduced to a level at which the external light ghost cannot be visually recognized, and the brightness unevenness is hardly visually recognized. That is, the display image is much easier to see than a case where the louver is not provided.

### Examples 7 to 8

In Examples 7 to 8, the pitches P (i.e., interval between adjacent light shielding portions or difference in radius between adjacent concentric circles) between the light shielding portions and the radial width t of the light shielding portion were different from those in Examples 1 to 3. The other configurations are the same as those of Examples 1 to 3. That is, the pitch P between the light shielding portions was P = 100 µm in Example 7, and P = 3000 µm in Example 8.

The thickness t of the light shielding portion (i.e., the width of the light shielding portion in plan view from the direction of the optical axis OX) was t = 50 µm in Example 7, and t = 0.01 µm in Example 8.

The louvers of Examples 7 to 8 were incorporated into each head mounted display for evaluation of external light ghosts and brightness unevenness, and visual evaluation of the external light ghosts and the brightness unevenness was performed in the same manner as in other Examples.

In the louver of Example 7, the external light ghost was reduced to a level that cannot be visually recognized, and the display image was remarkably easy to see as compared with the case where the louver was not provided. However, the evaluation on the brightness unevenness of the display image was low as compared with the case of incorporating the louvers of Examples 1 to 3.

In the louver of Example 8, the external light ghost was significantly reduced as compared with the case where the louver was not provided, and the display image was easy to see. However, the evaluation on the effect of reducing the external light ghost was low, while the evaluation on the brightness unevenness was equivalent, as compared with the case of incorporating the louvers of Examples 1 to 3.

According to Examples 7 to 8, since the external light ghost can be reduced as compared with the case where the louver is not provided, the image quality of the display image can be significantly improved. As described above, if any of the louvers of Examples 1 to 8 is incorporated into the head mounted display, it is not necessary to surround the periphery of the optical path space of the display light with the light-shielding member, and thus, it is possible to suppress deterioration in display image quality due to external light and to suppress high temperature and high humidity inside the head mounted display. However, it can be said that Examples 1 to 3 and Examples 4 to 6 are preferable examples because both the reduction of the external light ghost and the suppression of the brightness unevenness can be achieved at a higher level than Examples 7 and 8.

### Other Embodiments

Note that the present invention is not limited to the above-described embodiments and examples, and many modifications can be made within the technical idea of the present invention, as defined by the claims. For example, a light shielding portion having a concentric circle shape and a light shielding portion having a concentric arc shape may coexist in one louver. The light shielding portion may be formed along a concentric circle up to a certain radius, and the light shielding portion may be formed along a concentric arc for a radius beyond the radius. Conversely, the light shielding portion may be formed along a concentric arc up to a certain radius, and the light shielding portion may be formed along a concentric circle for a radius beyond the certain radius.

In addition, the light shielding portion does not necessarily have to be formed along a completely concentric circle or a completely concentric arc, and may be allowed as long as it is a deformation to such an extent that substantially equivalent effects can be obtained. That is, it is acceptable as long as substantially equivalent luminance uniformity of the display image can be obtained, or substantially equivalent ease of manufacture can be achieved when the louver is manufactured by die molding.

For example, the light shielding portion may be provided along a plurality of ellipses or a part of the ellipses having a common focal point and different length of diameter (not covered by the claimed invention). Alternatively, the light shielding portion may be provided along a plurality of ring shapes in which the areas of the surrounded portions are different from each other, the positions of the centers of gravity are equal, and the outer edges do not intersect each other.

The louver may be provided in an optical device other than a head mounted display (not covered by the claimed invention), and may be mounted on, for example, a handheld display, a camera that captures a still image or a moving image, a microscope, or an endoscope.

### Other Embodiments

While the present invention has been described with reference to exemplary embodiments, it is to be understood that the invention is not limited to the disclosed exemplary embodiments but by the scope of the following claims.

## Claims

1. A head mounted display (100) comprising:
an optical unit (22) configured to direct display light (IMG) emitted from a display panel (21) to an eye (24) of a user; and
a louver (23) disposed in an optical path of the display light (IMG) from the optical unit (22) toward the eye (24) of the user, wherein
the louver (23) comprises a light transmitting portion having a predetermined width and light shielding portions (5) disposed so as to sandwich the light transmitting portion as viewed in an optical axis direction of the optical unit (22),
**characterized in that**
each of the light shielding portions (5) is arranged at a predetermined interval (P) from each other along a plurality of circles having different diameters or a plurality of arcs having different diameters in a case where the louver (23) is viewed from the optical axis (OX) direction of the optical unit (22).

2. The head mounted display (100) according to claim 1, wherein
the plurality of circles are a plurality of concentric circles having different diameters, and
the plurality of arcs are a plurality of concentric arcs having different diameters.

3. The head mounted display (100) according to claim 2, wherein
centers (C) of the plurality of concentric circles having different diameters or centers (C) of the plurality of concentric arcs having different diameters are
located on an optical axis (OX) of the optical unit (22).

4. The head mounted display (100) according to any one of claims 1 to 3, wherein
the light shielding portions (5) are made of a light shielding material and is provided inside a plate-shaped base portion (2, 3) made of a light transmitting material.

5. The head mounted display (100) according to any one of claims 1 to 3, wherein
in a cross section of the louver (23) taken along the optical axis (OX) direction of the optical unit (22),
the louver (23) includes a first base portion (2) having a concave and convex shape and a second base portion (3) having a concave and convex shape fitted to the concave and convex shape of the first base portion (2), and
the light shielding portions (5) are sandwiched between the first base portion (2) and the second base portion (3).

6. The head mounted display (100) according to any one of claims 1 to 5, wherein
in a cross section of the louver (23) taken along a direction orthogonal to an optical axis (OX) direction of the optical unit (22),
a width (t) of each of the light shielding portions (5) is 9% or less of an interval (P) between the light shielding portions (5) arranged with the light transmitting portion interposed therebetween.

7. The head mounted display (100) according to claim 6, wherein
the interval (P) between the light shielding portions (5) is 500 µm or more and 2000 µm or less.

8. The head mounted display (100) according to claim 6, wherein
the width (t) of each of the light shielding portions (5) is 0.1 µm or more and 45 µm or less.

9. The head mounted display (100) according to any one of claims 1 to 8, wherein
the light shielding portions (5) are formed of a light absorbing material or a light reflecting material.

## Patentansprüche

1. Kopfmontierte Anzeige (100), die aufweist:
eine optische Einheit (22), die konfiguriert ist, Anzeigelicht (IMG), das von einer Anzeigetafel (21) emittiert wird, auf ein Auge (24) eines Nutzers zu richten; und
eine Jalousie (23), die in einem optischen Pfad des Anzeigelichts (IMG) von der optischen Einheit (22) hin zu dem Auge (24) des Nutzers angeordnet ist, wobei
die Jalousie (23) einen lichtdurchlässigen Anteil, der eine vorbestimmte Breite hat, und Lichtabschirmanteile (5), die so angeordnet sind, dass sie den lichtdurchlässigen Anteil aus der Sicht einer optischen Achsenrichtung der optischen Einheit (22) einbetten, aufweist,
**dadurch gekennzeichnet, dass**
jeder der Lichtabschirmanteile (5) mit einem vorbestimmten Abstand (P) voneinander entlang einer Vielzahl von Kreisen, die verschiedene Durchmesser haben, oder einer Vielzahl von Bögen, die verschiedene Durchmesser haben, angeordnet ist in einem Fall, in dem die Jalousie (23) von der Richtung der optischen Achse (OX) der optischen Einheit (22) gesehen wird.

2. Kopfmontierte Anzeige (100) nach Anspruch 1, wobei
die Vielzahl der Kreise eine Vielzahl von konzentrischen Kreisen, die verschiedene Durchmesser haben, sind, und
die Vielzahl der Bögen eine Vielzahl von konzentrischen Bögen, die verschiedene Durchmesser haben, sind.

3. Kopfmontierte Anzeige (100) nach Anspruch 2, wobei
Zentren (C) der Vielzahl von konzentrischen Kreisen, die verschiedene Durchmesser haben, oder Zentren (C) der Vielzahl von konzentrischen Bögen, die verschiedene Durchmesser haben, auf einer optischen Achse (OX) der optischen Einheit (22) lokalisiert sind.

4. Kopfmontierte Anzeige (100) nach einem der Ansprüche 1 bis 3, wobei
die Lichtabschirmanteile (5) aus einem lichtabschirmenden Material gemacht sind und innerhalb eines plattenförmigen Basisanteils (2, 3), das aus einem lichtdurchlässigen Material gemacht ist, bereitgestellt sind.

5. Kopfmontierte Anzeige (100) nach einem der Ansprüche 1 bis 3, wobei
in einem Querschnitt der Jalousie (23), der entlang der Richtung der optischen Achse (OX) der optischen Einheit (22) genommen wird, die Jalousie einen ersten Basisanteil (2), der eine konkave und konvexe Form hat, und einen zweiten Basisanteil (3), der eine konkave und konvexe Form, die zu der konkaven und konvexen Form des ersten Basisanteils (2) passt, hat, enthält, und
die Lichtabschirmanteile (5) zwischen dem ersten Basisanteil (2) und dem zweiten Basisanteil (3) eingebettet sind.

6. Kopfmontierte Anzeige (100) nach einem der Ansprüche 1 bis 5, wobei
in einem Querschnitt der Jalousie (23), der entlang einer Richtung, die senkrecht zu einer Richtung einer optischen Achse (OX) der optischen Einheit (22) ist, genommen wird,
eine Breite (t) von jedem der Lichtabschirmanteile (5) 9 % oder weniger eines Abstands (P) zwischen den Lichtabschirmanteilen (5), die mit dem lichtdurchlässigen Anteil zwischen ihnen angeordnet sind, ist.

7. Kopfmontierte Anzeige (100) nach Anspruch 6, wobei
der Abstand (P) zwischen den Lichtabschirmanteilen (5) 500 µm oder mehr und 2000 µm oder weniger ist.

8. Kopfmontierte Anzeige (100) nach Anspruch 6, wobei
die Breite (t) von jedem der Lichtabschirmanteile (5) 0,1 µm oder mehr und 45 µm oder weniger ist.

9. Kopfmontierte Anzeige (100) nach einem der Ansprüche 1 bis 8, wobei
die Lichtabschirmanteile (5) aus einem lichtabsorbierenden Material oder einem lichtreflektierenden Material gebildet sind.

## Revendications

1. Visiocasque (100) comprenant :
une unité optique (22) configurée pour diriger une lumière d'affichage (IMG) émise depuis un panneau d'affichage (21) vers un œil (24) d'un utilisateur ; et
une persienne (23) disposée dans un trajet optique de la lumière d'affichage (IMG) depuis l'unité optique (22) vers l'œil (24) de l'utilisateur, dans lequel
la persienne (23) comprend une partie de transmission de lumière présentant une largeur prédéterminée et des parties faisant écran à la lumière (5) disposées de manière à prendre en sandwich la partie de transmission de lumière en vue dans une direction d'axe optique de l'unité optique (22),
**caractérisé en ce que**
chacune des parties faisant écran à la lumière (5) est agencée à un intervalle prédéterminé (P) entre elles le long d'une pluralité de cercles présentant des diamètres différents ou d'une pluralité d'arcs présentant des diamètres différents dans un cas où la persienne (23) est visualisée depuis la direction d'axe optique (OX) de l'unité optique (22).

2. Visiocasque (100) selon la revendication 1, dans lequel la pluralité de cercles sont une pluralité de cercles concentriques présentant des diamètres différents, et
la pluralité d'arcs sont une pluralité d'arcs concentriques présentant des diamètres différents.

3. Visiocasque (100) selon la revendication 2, dans lequel des centres (C) de la pluralité de cercles concentriques présentant des diamètres différents ou des centres (C) de la pluralité d'arcs concentriques présentant des diamètres différents sont situés sur un axe optique (OX) de l'unité optique (22).

4. Visiocasque (100) selon l'une quelconque des revendications 1 à 3, dans lequel
les parties faisant écran à la lumière (5) sont constituées d'un matériau faisant écran à la lumière et sont prévues à l'intérieur d'une partie de base en forme de plaque (2, 3) constituée d'un matériau de transmission de lumière.

5. Visiocasque (100) selon l'une quelconque des revendications 1 à 3, dans lequel
dans une coupe transversale de la persienne (23) prise le long de la direction d'axe optique (OX) de l'unité optique (22),
la persienne (23) comporte une première partie de base (2) présentant une forme concave et convexe et une deuxième partie de base (3) présentant une forme concave et convexe adaptée à la forme concave et convexe de la première partie de base (2), et
les parties faisant écran à la lumière (5) sont prises en sandwich entre la première partie de base (2) et la deuxième partie de base (3).

6. Visiocasque (100) selon l'une quelconque des revendications 1 à 5, dans lequel
dans une coupe transversale de la persienne (23) prise le long d'une direction orthogonale à une direction d'axe optique (OX) de l'unité optique (22),
une largeur (t) de chacune des parties faisant écran à la lumière (5) est 9 % ou moins d'un intervalle (P) entre les parties faisant écran à la lumière (5) agencées avec la partie de transmission de lumière interposée entre elles.

7. Visiocasque (100) selon la revendication 6, dans lequel l'intervalle (P) entre les parties faisant écran à la lumière (5) est 500 µm ou plus et 2000 µm ou moins.

8. Visiocasque (100) selon la revendication 6, dans lequel la largeur (t) de chacune des parties faisant écran à la lumière (5) est 0,1 µm ou plus et 45 µm ou moins.

9. Visiocasque (100) selon l'une quelconque des revendications 1 à 8, dans lequel
les parties faisant écran à la lumière (5) sont constituées d'un matériau absorbant la lumière ou d'un matériau réfléchissant la lumière.
